# EUROPÄISCHE PATENTSCHRIFT

(11) **EP 3 408 065 B1**
(45) Veröffentlichungstag und Bekanntmachung des Hinweises auf die Patenterteilung: **26.02.2020**
(21) Anmeldenummer: 17701987.4
(22) Anmeldetag: 19.01.2017
(51) Int. Cl.: B29C 33/00, F16J 15/46, B29C 44/34, F16L 3/12

(54) **FORMWERKZEUG MIT DICHTEINRICHTUNG**
MOULDING TOOL WITH SEALING DEVICE
OUTIL DE MOULAGE AVEC DISPOSITIF D'ÉTANCHÉITÉ

(30) Priorität: 28.01.2016 AT 422016
(43) Veröffentlichungstag der Anmeldung: 05.12.2018
(73) Patentinhaber: ALBA Tooling & Engineering GmbH, 5552 Forstau (AT)
(72) Erfinder: SEYFRIED, Markus, 8972 Ramsau am Dachstein (AT)
(74) Vertreter: Keschmann, Marc
(86) Internationale Anmeldenummer: PCT/AT2017/000001
(87) Internationale Veröffentlichungsnummer: WO 2017/127855

(56) Entgegenhaltungen:
- EP-A1- 1 640 646
- EP-A1- 2 907 643
- EP-A1- 3 026 182
- EP-A1- 3 115 171
- EP-A2- 0 236 574
- WO-A1-98/36481
- GB-A- 2 415 754
- US-A1- 2003 222 183

## Beschreibung

Die Erfindung betrifft ein Formwerkzeug zur Herstellung von Kunststoffformteilen mit einander zugewandte Flächen aufweisenden Werkzeughälften und einer Dichteinrichtung für die Abdichtung der Werkzeughälften, mit einem aufblähbaren Dichtschlauch, wobei zumindest ein offenes Ende des Dichtschlauches an eine Druckleitung für Druckmedium anschließbar ist, und mit einem Endstück für den Dichtschlauch, wobei wenigstens eine Werkzeughälfte eine vorzugsweise nutförmige Aufnahme für den aufblähbaren Dichtschlauch und wenigstens eine Aufnahmevertiefung für das wenigstens eine Endstück aufweist.

Eine Dichteinrichtung der eingangs genannten Art ist beispielsweise in der EP 1683993 A1 beschrieben.

Dichtvorrichtungen für die Abdichtung von einander zugewandten Oberflächen benachbarter Maschinenteile oder Maschinenelemente sind in unterschiedlichen Ausbildungen bekannt. Im Formenbau sind als Dichtelemente häufig aufblähbare Dichtschläuche in Verwendung, welche in einer Nut des einen Maschinenteiles angeordnet sind und nach ihrer Beaufschlagung mit einem Druckmedium über die Oberfläche des ersten Maschinenteiles in Richtung zur Oberfläche des benachbarten zweiten Maschinenteiles vorragen und auf diese Weise eine elastische Dichtung bewirken. Ein derartiger Dichtschlauch, welcher mit Druckmedium beaufschlagbar ist, erlaubt es, Maßtoleranzen in hohem Maße auszugleichen und erlaubt es weiter, bei verschiedenen Herstellungsprozessen, bei welchen unterschiedliche Materialien beim Hinterschäumen verarbeitet werden, auch in einzelnen Phasen der Bearbeitung durch Ablassen des Druckmediums eine gezielte Undichtheit herzustellen, über welche beispielsweise beim Schäumen eines Werkstoffes gebildetes Gas und Treibgas abgeleitet werden kann. Bei einem derartigen Prozess kann dann, wenn nach dem Verdrängen von Luft oder Treibgas Schaum am Dichtkragen zwischen dem Spritzgussteil und einem weiteren Formteil austritt, die Dichtung rasch durch Aufblasen wieder hergestellt werden und der Schäumvorgang ohne weiteren Materialverlust zu Ende geführt werden.

Die Enden des aufblähbaren Dichtschlauches sind bei Ausbildungen gemäß dem Stand der Technik in der Regel mit Einsatz- oder Abschlussstücken abgeschlossen, von welchen wenigstens einer eine Durchführung für das Einbringen von Druckmedium aufweist. Diese Abschlusstücke sind in jeweiligen Ausnehmungen des Maschinenteils angeordnet, die sich im Wesentlichen quer zur Längsrichtung der Nut erstrecken, welche für die Aufnahme des Dichtschlauches vorgesehen ist. Um eine ausreichende Dichtwirkung in den Randbereichen bzw. am Übergang zwischen zwei Schlauchsegmenten sicherzustellen, sieht die EP 1683993 A1 vor, dass das Anschlussstück von einem quer zur Achse des Dichtschlauches verschieblich geführten Stempel gebildet ist und dass der Dichtschlauch in radialer Richtung in einen Hohlraum des Stempels mündet, welcher mit Druckmedium beaufschlagbar ist. Dadurch kann der Druck des Druckmediums nicht nur zum Aufblähen des Dichtschlauches, sondern gleichzeitig auch zur axialen Verschiebung des Stempels ausgenützt werden, wobei der Stempel in der axial verschobenen Position eine Dichtwirkung bis an den Rand der Form gewährleistet.

Andere Ausbildungen von End- bzw. Abschlussstücken sind in den Schriften EP 1045179 A2, EP 1361380 A2, EP 1640646 A1 und EP 2907643 A1 beschrieben.

Die beschriebenen Ausbildungen des Abschlussstückes sind aufwändig in der Konstruktion und daher kostenintensiv. Weiters sind Ausbildungen mit beweglichen Elementen, wie z.B. einem beweglichen Stempel, verschleiß- und fehleranfällig.

Die Erfindung zielt daher darauf ab, ein besonders einfaches und kostengünstiges Formwerkzeug mit einer Dichteinrichtung zu schaffen, mit der eine Dichtwirkung bis an den Rand der Form und ein einfacher Ein- und Ausbau der Elemente der Dichtung gewährleistet wird.

Zur Lösung dieser Aufgabe besteht die erfindungsgemäße Ausbildung bei einem Formwerkzeug der eingangs genannten Art im Wesentlichen darin, dass das Endstück eine aufweitbare Durchführung für einen durchgeführten Abschnitt des Dichtschlauches derart aufweist, dass das offene Ende des Dichtschlauchs im durchgeführten Zustand aus dem Endstück vorragt. Es handelt sich hierbei somit nicht um ein Endstück, an welches der Dichtschlauch angeschlossen ist und über welches der Dichtschlauch mit der Druckleitung für das Druckmedium verbunden ist, sondern um ein Endstück im Sinne eines Positionierelements, mit welchem der Dichtschlauch im Maschinenteil in Position gehalten werden kann. Der Dichtschlauch wird dabei durch das Endstück hindurchgeführt, wobei das Endstück bevorzugt aufweitbar ausgebildet ist, sodass das Endstück sich bei aufgeblähtem Dichtschlauch entsprechend der Dichtschlauchaufblähung aufweiten kann. Im aufgeweiteten Zustand legt sich das Endstück an entsprechende randseitige Dichtflächen an, sodass eine Dichtwirkung bis in die Randbereiche erfolgt. Alternativ, insbesondere wenn das Endstück nicht elastisch oder aufweitbar ausgebildet ist, oder ergänzend kann durch die Aufblähung des durch das Endstück hindurchgeführten Dichtschlauchs auch eine Verschiebung des Endstücks bewirkt werden, was ebenfalls zu einer randseitigen Abdichtung führen kann. Dadurch, dass der Dichtschlauch nicht an ein gesondertes Anschlussstück angeschlossen ist, sondern durch das erfindungsgemäße Endstück hindurchgeführt ist, kann das aus dem Endstück herausragende offene Ende des Dichtschlauchs unmittelbar mit einer Druckmediumzuführung verbunden werden. Es entfällt somit die Notwendigkeit einer Anschlussstelle zwischen dem Ende des Dichtschlauches und einem Anschlussstück, sodass die damit verbunden Dichtheitsprobleme vermieden werden können. Das Endstück kann daher besonders einfach und kostengünstig hergestellt werden.

Gemäß einer bevorzugten Ausbildung ist vorgesehen, dass die Durchführung ausgebildet ist, um den durchgeführten Abschnitt des Dichtschlauches in gekrümmtem oder gebogenem Zustand zu halten. Dadurch kann der Dichtschlauch in einfacher Weise von einer Längsorientierung, in welcher er sich im in einer Aufnahmenut des Maschinenteils aufgenommenen Zustand befindet, in eine quer dazu verlaufende Richtung umgelenkt werden, wodurch das offene Ende des Dichtschlauchs insbesondere in eine für Einspeisung des Druckmediums geeignete Lage bringbar ist, wie z.B. in ein Sackloch des Maschinenteils, über welches das Druckmedium zugeführt wird.

Bevorzugt ist in diesem Zusammenhang vorgesehen, dass die Durchführung wenigstens ein erstes und ein zweites, vorzugsweise jeweils aufweitbares, Halteelement umfasst, deren Durchführungsachsen einen Winkel von vorzugsweise 45 - 135°, insbesondere 90°, miteinander einschließen. Das erste Halteelement ist hierbei bevorzugt am Anfang des durchgeführten Abschnitts des Dichtschlauchs und das zweite Halteelement am Ende des durchgeführten Abschnitts angeordnet. Zwischen den beiden Halteelementen weist der Dichtschlauch eine Krümmung bzw. Biegung auf.

Eine besonders einfache Befestigung des Endstücks am Dichtschlauch gelingt, wenn die Durchführung, insbesondere das erste und das zweite Halteelement, den Dichtschlauch ringförmig umschließt bzw. umschließen. Der Dichtschlauch kann somit in einfacher Weise durch das Endstück durchgesteckt werden, wobei das ringförmig umschließende Element vorzugsweise elastisch aufweitbar ausgebildet ist, um das Durchstecken bzw. Einführen des Dichtschlauchs zu erleichtern. Die elastische Rückstellkraft bewirkt ein enges Umfassen des Dichtschlauchs, wodurch die Haltekraft vergrößert wird.

Alternativ kann wenigstens eines der Halteelemente den Dichtschlauch nur teilweise umschließen, d.h. z.B. unten offen sein. Auf diese Weise kann die Verbindung zwischen dem Endstück und dem Dichtschlauch durch Ein- oder Aufklipsen erfolgen.

Bevorzugt sind das erste und das zweite Halteelement einstückig mit dem Endstück ausgebildet. Das Endstück besteht somit aus einem einzigen Stück, das in einfacher und kostengünstiger Weise mit Hilfe bekannter Herstellungsverfahren, wie z.B. Gieß-oder Spritzgussverfahren erzeugt werden kann.

Eine bevorzugte Ausführung sieht vor, dass das Endstück aus flexiblem Material, wie z.B. Kunststoff, insbesondere Silikon, Polyethylen, Polypropylen oder Polyamid, besteht.

Um die Dichtwirkung zur Randseite des Maschinenteils bzw. zu einem angrenzenden Schlauchsegment des Dichtschlauchs zu verbessern, kann vorgesehen sein, dass das Endstück wenigstens eine vorzugsweise ebene Dichtfläche aufweist, die in dichtenden Kontakt mit einer an einer Aufnahmevertiefung der Werkzeughälfte ausgebildeten Gegenfläche oder einem weiteren Dichtstück bringbar ist. Die Dichtfläche und die Gegenfläche sind hierbei komplementär ausgebildet, sodass eine vollflächige Anlage gewährleistet ist.

Um eine sichere Positionierung und Lagefixierung des Endstücks relativ zum Maschinenteil zu begünstigen, sieht eine bevorzugte Ausbildung vor, dass das Endstück formschlüssig in der Aufnahmevertiefung aufnehmbar ist. Das Endstück und die Aufnahmevertiefung weisen zu diesem Zweck bevorzugt im Wesentlichen die gleiche Kontur auf. Die Aufnahmevertiefung kann beispielsweise durch Fräsen oder durch andere formgebende Verfahren im Maschinenteil ausgebildet werden, was insbesondere bei einer maßgenauen und präzisen Ausführung und/oder bei komplexer Formgebung einen zusätzlichen Herstellungsaufwand zur Folge hat. Um den diesbezüglichen Aufwand zu reduzieren, kann die Aufnahmevertiefung auch in einem Übermaß und mit einer vereinfachten Geometrie hergestellt werden. Um dennoch eine möglichst passgenaue Aufnahme des Endstücks in der Aufnahmevertiefung zu ermöglichen, ist bevorzugt vorgesehen, dass das Endstück formschlüssig in einem in der Aufnahmevertiefung angeordneten Distanzstück aufnehmbar ist. Das Distanzstück füllt hierbei den Spalt zwischen den Rändern der Aufnahmevertiefung und dem Endstück aus.

Eine formschlüssige Aufnahme des Endstücks in der Aufnahmevertiefung wird vorzugsweise dadurch begünstigt, dass das Endstück wenigstens zwei im Wesentlichen ebene Dichtflächen aufweist, die einen Winkel von 45° oder 90° miteinander einschließen. Außerdem kann das Endstück dadurch in unterschiedlichen Orientierungen eingesetzt werden, wobei je nach gewählter Orientierung die eine oder die andere der beiden Dichtflächen mit einer entsprechenden Dichtfläche am Endstück eines anschließenden Dichtschlauchsegments zusammenwirkt.

Eine besonders hohe Flexibilität wird bei einer bevorzugten Ausführung ermöglicht, bei der am Endstück drei im Winkel von jeweils 45° aneinander anschließende Dichtflächen vorgesehen sind.

Gemäß einer bevorzugten Ausbildung weist das Endstück an der dem Dichtschlauch abgewandten Seite eine Dichtfläche auf, die vorzugsweise im Wesentlichen eben ist und parallel zu der Ebene angeordnet ist, in welcher der Dichtschlauch verläuft. Die genannte Dichtfläche kann eine die Dichtwirkung erhöhende Formgebung aufweisen, wie z.B. mit einer vorstehenden Rippe oder Dichtlippe versehen sein oder nach außen bombiert ausgeführt sein.

Wie bereits erwähnt, kann das offene Ende des Dichtschlauchs in einem Sackloch der Werkzeughälfte aufgenommen sein, wobei das Sackloch über die Druckleitung mit Druckmedium beaufschlagbar ist. Die Achse des Sacklochs kann dabei mit dem aus dem Endstück kommenden Endabschnitt fluchten oder dazu quer oder senkrecht stehen. Im letzten Fall ist eine Ausbildung bevorzugt, bei der das offene Ende des Dichtschlauchs zwischen dem Endstück und dem Sackloch eine Krümmung von vorzugsweise 10-160°, besonders bevorzugt 40-90° aufweist.

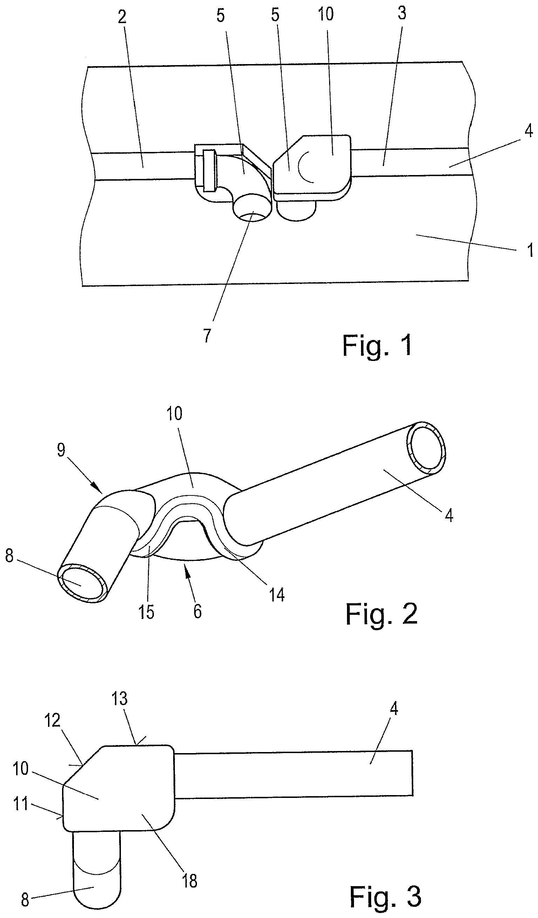

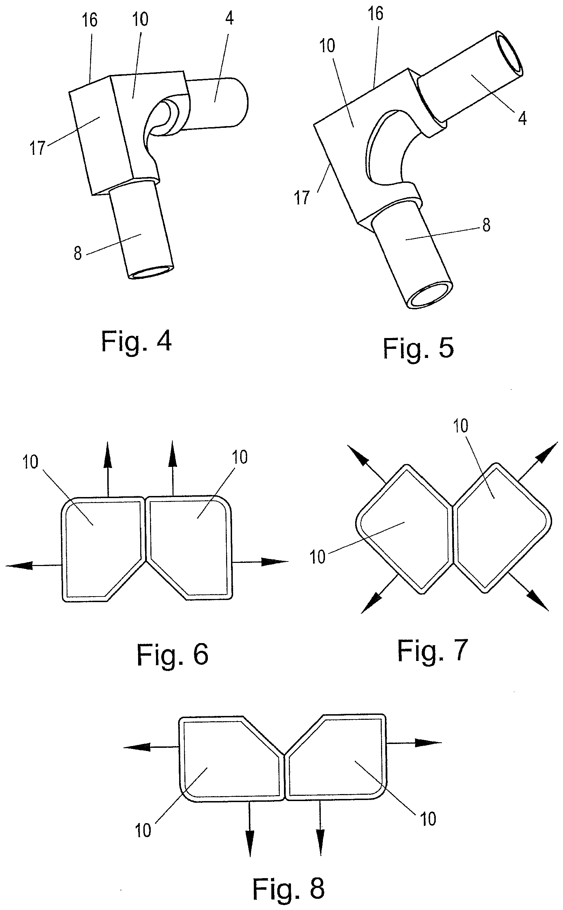

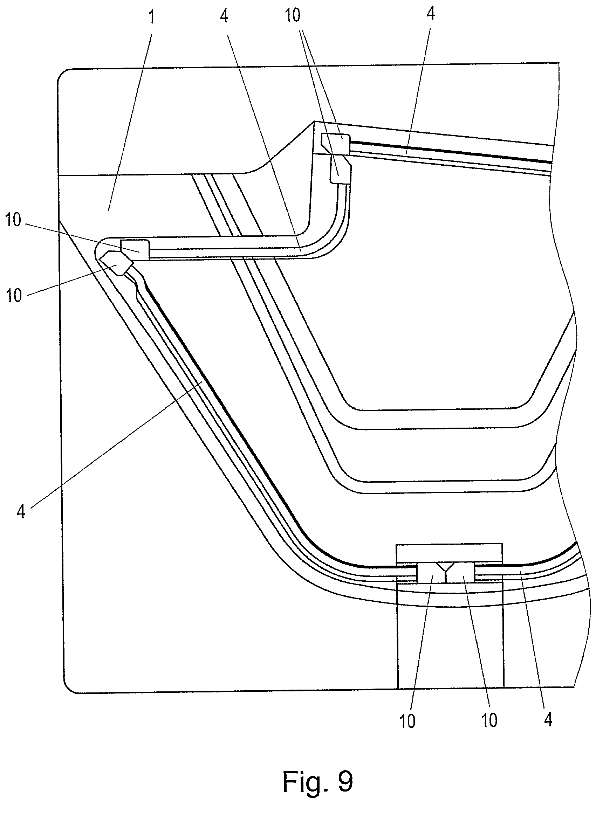

Die Erfindung wird nachfolgend anhand eines in der Zeichnung schematisch dargestellten Ausführungsbeispiels näher erläutert. In dieser zeigen Fig. 1 ein Formwerkzeug mit eingelegtem Dichtschlauch, Fig. 2 eine perspektivische Ansicht eines Dichtschlauchabschnitts samt Endstück, Fig. 3 eine Draufsicht auf einen Dichtschlauchabschnitt gemäß Fig. 2, Fig. 4 eine perspektivische Ansicht eines Dichtschlauchabschnitts samt Endstück in einer alternativen Ausbildung, Fig. 5 eine weitere Ansicht des Dichtschlauchabschnitts gemäß Fig. 4, Fig. 6, 7 und 8 verschiedene Orientierungen von benachbarten Endstücken und Fig. 9 ein Formwerkzeug mit mehreren Dichtschläuchen.

In Fig. 1 ist ein Formwerkzeug 1 dargestellt, welches eine erste Nut 2 für die Aufnahme eines ersten aufblähbaren Dichtschlauchs oder Dichtschlauchsegments (nicht dargestellt) und eine zweite Nut 3 für die Aufnahme eines zweiten aufblähbaren Dichtschlauchs oder Dichtschlauchsegments 4 aufweist. Die Nut 2 bzw. 3 mündet in eine erweiterte Aufnahmevertiefung 5, in welcher der Dichtschlauch 4 im Krümmungsbereich 6 um 90° umgelenkt wird. An die Aufnahmevertiefung 5 schließt ein senkrecht zur Nut 2 bzw. 3 verlaufendes Sackloch 7 an, in welches das offene Ende 8 des Dichtschlauchs 4 eingeführt bzw. eingesteckt wird. Das Sackloch kann generell in einem Winkel 10-160° zur Ebene der Nut 3 verlaufen. Das Sackloch 7 steht mit einer nicht dargestellten Druckleitung für Druckmedium in Verbindung, sodass der Dichtschlauch 4 im in das Sackloch 7 eingesteckten Zustand mit Druckmedium beaufschlagt werden kann. Mit Rücksicht auf die senkrechte Erstreckung des Sacklochs 7 muss das Ende des Dichtschlauchs 4 im Krümmungsbereich 9 nochmals um 90° umgelenkt werden.

Wie in den Fig. 2 und 3 ersichtlich, ist der Dichtschlauch 4 im Krümmungsbereich 6 durch ein Endstück 10 hindurchgeführt, wobei das Endstück 10 in der erweiterten Aufnahmevertiefung 5 formschlüssig aufgenommen ist. Zu diesem Zweck weist das Endstück 10 eine Kontur mit Dichtflächen 11, 12 und 13 auf, die an entsprechenden Gegenflächen an der Innenwand der Aufnahmevertiefung 5 zusammenwirken können. Das Endstück 10 umfasst ein ringförmiges erstes Halteelement 14 und ein ringförmiges zweites Halteelement 15, durch welche der Dichtschlauch 4 hindurchgeführt bzw. hindurchgesteckt ist. Ringachsen der ringförmigen Halteelemente 14 und 15 schließen dabei einen Winkel von 90° ein, sodass der Dichtschlauch im hindurchgeführten Abschnitt den Krümmungsbereich 6 ausbildet.

Das Endstück 10 besteht insbesondere aus einem elastischen Kunststoff, sodass es sich bei aufgeblähtem Dichtschlauch 4 aufweiten kann, wodurch wenigstens eine der Dichtflächen 11, 12 und 13 gegen eine entsprechende Gegenfläche angedrückt wird, um eine Abdichtung zu erreichen.

Die Ausbildung mit den drei aneinander anschließenden und jeweils einen Winkel von 45° miteinander einschließenden Dichtflächen 11, 12 und 13 ermöglicht vielseitige Einsatzmöglichkeiten, wie dies schematisch in den Fig. 6, 7 und 8 dargestellt ist. Die Pfeile symbolisieren dabei den Dichtschlauch 4, wobei erkennbar ist, dass der Dichtschlauch im durch das Endstück 10 hindurchgeführten Abschnitt eine Umlenkung um 90° erfährt. Insbesondere ermöglicht es die Anordnung der Dichtflächen 11, 12 und 13, ein Abdichtung zwischen zwei Endstücken zu erreichen, sodass zwischen zwei aneinander anschließenden Dichtschläuchen 4 keine undichte Stelle entsteht.

Wie in Fig. 3 gezeigt ist, weist das Endstück an der dem Dichtschlauch abgewandten Seite eine Dichtfläche 18 auf, die vorzugsweise im Wesentlichen eben ist und parallel zu der Ebene angeordnet ist, in welcher der Dichtschlauch 4 bzw. die Nut 3 verläuft. Es ist denkbar, diese Dichtfläche 18 mit einer Rippe oder dgl. zu versehen, um die Dichtwirkung zu erhöhen, wobei die Rippe beispielsweise einen der Krümmung 6 entsprechenden Verlauf aufweisen kann.

In Fig. 9 ist ein Anwendungsbeispiel dargestellt, wobei in entsprechende Nuten 3 des Formwerkzeugs 1 vier Dichtschläuche 4 eingelegt sind, die an den zueinander gewandten Endbereichen jeweils ein Endstück 10 tragen, wobei die benachbarten Endstücke 10 in unterschiedlichen gegenseitigen Ausrichtungen dichtend aneinander liegen. Insbesondere ist gezeigt, dass die Dichtschläuche 4 im Winkel von 45°, 90° oder 180° aneinander anschließen können. Weiters ist auch eine gegenseitige Ausrichtung in einem Winkel von 135° möglich.

In den Fig. 4 und 5 ist eine alternative Ausbildung des Endstücks 10 dargestellt, bei der zwei einen Winkel von 90° miteinander einschließende Dichtflächen 16 und 17 vorgesehen sind. Weiters ist das aus dem Endstück 10 herausragende offene Ende 8 des Dichtschlauchs 4 nicht um 90° gebogen, sondern läuft gerade weiter, was eine entsprechende Orientierung des Sacklochs 7 erfordert.

## Patentansprüche

1. Formwerkzeug zur Herstellung von Kunststoffformteilen mit einander zugewandte Flächen aufweisenden Werkzeughälften und einer Dichteinrichtung für die Abdichtung der Werkzeughälften, mit einem aufblähbaren Dichtschlauch (4), wobei zumindest ein offenes Ende des Dichtschlauches (4) an eine Druckleitung für Druckmedium anschließbar ist, und mit einem Endstück (10) für den Dichtschlauch (4), wobei wenigstens eine Werkzeughälfte eine vorzugsweise nutförmige Aufnahme für den aufblähbaren Dichtschlauch (4) und wenigstens eine Aufnahmevertiefung (5) für das wenigstens eine Endstück (10) aufweist, **dadurch gekennzeichnet, dass** das Endstück (10) eine aufweitbare Durchführung für einen durchgeführten Abschnitt des Dichtschlauches (4) derart aufweist, dass das offene Ende (8) des Dichtschlauchs (4) im durchgeführten Zustand aus dem Endstück (10) vorragt.

2. Formwerkzeug nach Anspruch 1, **dadurch gekennzeichnet, dass** die Durchführung ausgebildet ist, um den durchgeführten Abschnitt des Dichtschlauches (4) in gekrümmtem oder gebogenem Zustand zu halten.

3. Formwerkzeug nach Anspruch 1 oder 2, **dadurch gekennzeichnet, dass** die Durchführung wenigstens ein erstes (14) und ein zweites (15), vorzugsweise jeweils aufweitbares, Halteelement umfasst, deren Durchführungsachsen einen Winkel von vorzugsweise 45 - 135°, insbesondere 90°, miteinander einschließen.

4. Formwerkzeug nach Anspruch 1, 2 oder 3, **dadurch gekennzeichnet, dass** die Durchführung, insbesondere das erste (14) und das zweite (15) Halteelement, den Dichtschlauch (4) ringförmig umschließt bzw. umschließen.

5. Formwerkzeug nach Anspruch 3 oder 4, **dadurch gekennzeichnet, dass** das erste (14) und das zweite (15) Halteelement einstückig mit dem Endstück (10) ausgebildet sind.

6. Formwerkzeug nach einem der Ansprüche 1 bis 5, **dadurch gekennzeichnet, dass** das Endstück (10) aus flexiblem Material, wie z.B. Kunststoff, insbesondere Silikon, Polyethylen, Polypropylen oder Polyamid, besteht.

7. Formwerkzeug nach einem der Ansprüche 1 bis 6, **dadurch gekennzeichnet, dass** das Endstück (10) wenigstens eine vorzugsweise ebene Dichtfläche (11, 12, 13) aufweist, die in dichtenden Kontakt mit einer an einer Aufnahmevertiefung (5) der Werkzeughälfte ausgebildeten Gegenfläche oder einem weiteren Dichtstück bringbar ist.

8. Formwerkzeug nach Anspruch 7, **dadurch gekennzeichnet, dass** das Endstück (10) wenigstens zwei im Wesentlichen ebene Dichtflächen (11,12,13) aufweist, die einen Winkel von 45° oder 90° miteinander einschließen.

9. Formwerkzeug nach Anspruch 7 oder 8, **dadurch gekennzeichnet, dass** das Endstück (10) formschlüssig in der Aufnahmevertiefung (5) aufnehmbar ist.

10. Formwerkzeug nach Anspruch 7, 8 oder 9, **dadurch gekennzeichnet, dass** das Endstück (10) formschlüssig in einem in der Aufnahmevertiefung (5) angeordneten Distanzstück aufnehmbar ist.

11. Formwerkzeug nach einem der Ansprüche 1 bis 10, **dadurch gekennzeichnet, dass** das offene Ende des Dichtschlauchs (4) in einem Sackloch (7) der Werkzeughälfte aufgenommen ist, wobei das Sackloch (7) über die Druckleitung mit Druckmedium beaufschlagbar ist.

12. Formwerkzeug nach Anspruch 11, **dadurch gekennzeichnet, dass** das offene Ende (8) des Dichtschlauchs (4) zwischen dem Endstück (10) und dem Sackloch (7) eine Krümmung von vorzugsweise 10-160°, besonders bevorzugt 40-90°, aufweist.

## Claims

1. A molding tool for the production of plastic moldings, comprising tool halves with mutually facing surfaces and a sealing device for sealing the tool halves, with an inflatable sealing hose (4), at least one open end of the sealing hose (4) being connectable to a pressure line for pressure medium, and an end piece (10) for the sealing hose (4), wherein at least one tool half comprises a preferably groove-shaped seat for the inflatable sealing hose (4) and at least one seat depression (5) for the at least one end piece (10), **characterized in that** the end piece (10) comprises an expandable passage for a passed-through portion of the sealing hose (4) such that the open end (8) of the sealing hose (4) projects out of the end piece (10) in the passed-through state.

2. A molding tool according to claim 1, **characterized in that** the passage is designed to hold the passed-through portion of the sealing hose (4) in a curved or bent state.

3. A molding tool according to claim 1 or 2, **characterized in that** the passage comprises at least a first (14) and a second (15) holding element, which are preferably each expandable, the passage axes of which enclose an angle of preferably 45-135°, in particular 90°, with one another.

4. A molding tool according to claim 1, 2 or 3, **characterized in that** the passage, in particular the first (14) and the second (15) holding elements, annularly enclose(s) the sealing hose (14) .

5. A molding tool according to claim 3 or 4, **characterized in that** the first (14) and the second (15) holding elements are designed in one piece with the end piece (10).

6. A molding tool according to any one of claims 1 to 5, **characterized in that** the end piece (10) is made of a flexible material such as plastic, in particular silicone, polyethylene, polypropylene or polyamide.

7. A molding tool according to any one of claims 1 to 6, **characterized in that** the end piece (10) comprises at least one preferably plane sealing surface (11,12,13) that can be brought into sealing contact with a counter-surface formed on a seat depression (5) of the tool half, or with a further sealing piece.

8. A molding tool according to claim 7, **characterized in that** the end piece (10) comprises at least two substantially plane sealing surfaces (11,12,13) enclosing an angle of 45° or 90° with one another.

9. A molding tool according to claim 7 or 8, **characterized in that** the end piece (10) is receivable in the seat depression (5) in a positive-locking manner.

10. A molding tool according to claim 7, 8 or 9, **characterized in that** the end piece (10) is receivable in a positive-locking manner in a spacer element disposed in the seat depression (5).

11. A molding tool according to any one of claims 1 to 10, **characterized in that** the open end of the sealing hose (4) is received in a blind hole (7) of the tool half, wherein pressure medium is feedable to the blind hole (7) via the pressure line.

12. A molding tool according to claim 11, **characterized in that** the open end (8) of the sealing hose (4) comprises a curvature of preferably 10-160°, particularly preferably 40-90°, between the end piece (10) and the blind hole (7).

## Revendications

1. Outil de formage pour la fabrication de parties formées en matière plastique avec des moitiés d'outil présentant des surfaces tournées l'une vers l'autre et un dispositif étanche pour l'étanchéité des moitiés d'outil, avec un tuyau d'étanchéité (4) gonflable, dans lequel au moins une extrémité ouverte du tuyau d'étanchéité (4) peut être raccordée à une conduite de pression pour du fluide sous pression, et avec un embout (10) pour le tuyau d'étanchéité (4), dans lequel au moins une moitié d'outil présente un logement de préférence en forme de rainure pour le tuyau d'étanchéité (4) gonflable et au moins une cavité de réception (5) pour l'au moins un embout (10), **caractérisé en ce que** l'embout (10) présente un passage pouvant être élargi pour une section traversée du tuyau d'étanchéité (4) de sorte que l'extrémité ouverte (8) du tuyau d'étanchéité (4) dépasse dans l'état traversé de l'embout (10).

2. Outil de formage selon la revendication 1, **caractérisé en ce que** le passage est réalisé afin de maintenir la section traversée du tuyau d'étanchéité (4) dans l'état courbé ou plié.

3. Outil de formage selon la revendication 1 ou 2, **caractérisé en ce que** le passage comporte au moins un premier (14) et un second (15) élément de retenue, de préférence respectivement pouvant être élargi, dont les axes de passage forment un angle de préférence de 45 à 135°, en particulier de 90°.

4. Outil de formage selon la revendication 1, 2 ou 3, **caractérisé en ce que** le passage, en particulier le premier (14) et le second (15) élément de retenue entoure ou entourent le tuyau d'étanchéité (4) en anneau.

5. Outil de formage selon la revendication 3 ou 4, **caractérisé en ce que** le premier (14) et le second (15) élément de retenue sont réalisés d'un seul tenant avec l'embout (10).

6. Outil de formage selon l'une des revendications 1 à 5, **caractérisé en ce que** l'embout (10) consiste en un matériau flexible, tel qu'une matière plastique, en particulier silicone, polyéthylène, polypropylène ou polyamide.

7. Outil de formage selon l'une des revendications 1 à 6, **caractérisé en ce que** l'embout (10) présente au moins une surface étanche (11,12,13) de préférence plane qui peut être amenée en contact étanche avec une surface antagoniste réalisée au niveau d'une cavité de réception (5) de la moitié d'outil ou une autre pièce étanche.

8. Outil de formage selon la revendication 7, **caractérisé en ce que** l'embout (10) présente au moins deux surfaces étanches (11,12,13) sensiblement planes qui forment un angle de 45° ou 90° entre elles.

9. Outil de formage selon la revendication 7 ou 8, **caractérisé en ce que** l'embout (10) peut être reçu à complémentarité de formes dans la cavité de réception (5).

10. Outil de formage selon la revendication 7, 8 ou 9, **caractérisé en ce que** l'embout (10) peut être reçu à complémentarité de formes dans une pièce d'écartement agencée dans la cavité de réception (5).

11. Outil de formage selon l'une des revendications 1 à 10, **caractérisé en ce que** l'extrémité ouverte du tuyau d'étanchéité (4) est reçue dans un trou borgne (7) de la moitié d'outil, dans lequel le trou borgne (7) peut être alimenté par le biais de la conduite de pression en fluide sous pression.

12. Outil de formage selon la revendication 11, **caractérisé en ce que** l'extrémité ouverte (8) du tuyau d'étanchéité (4) présente entre l'embout (10) et le trou borgne (7) une courbure de préférence de 10 à 160°, en particulier de préférence de 40 à 90°.
